# EUROPÄISCHE PATENTANMELDUNG

(11) **EP 1 209 788 A1**
(43) Veröffentlichungstag der Anmeldung: **29.05.2002**
(21) Anmeldenummer: 01127838.9
(22) Anmeldetag: 22.11.2001
(51) Int. Cl.: H02G 5/08

(54) **Elektrische Koppelvorrichtung für Sammelschienensystem**

(30) Priorität: 22.11.2000 DE 10058146; 21.03.2001 DE 10113887
(71) Anmelder: ONELINE AG, 39179 Barleben (DE); EFEN Elektrotechnische Fabrik GmbH, 65344 Eltville (DE)
(72) Erfinder: Förster, Reno, 39435 Schneidlingen (DE); Mergerie, Bernhard, 65719 Hofheim (DE); Kölbel, Christian, 65232 Taunustein (DE)
(74) Vertreter: Liesegang, Eva

(57) **Zusammenfassung**

Die Erfindung betrifft eine Elektrische Koppelvorrichtung zum Aufstecken auf Sammelschienen eines Sammelschienensystems in einer elektrischen Energieversorgungseinheit mit einem Isoliergehäuse, in dem ein Innenraum ausgebildet ist; wenigstens vier voneinander elektrisch isolierten Steckkontakten, die durch eine Gehäusewand des Isoliergehäuses durchkontaktiert sind und jeweils einen Befestigungsabschnitt zum Befestigen des Steckkontakts an dem Isoliergehäuse sowie einen aus einem elektrisch leitenden Material gebildeten und außerhalb des Isoliergehäuses angeordneten Aufsteckabschnitt zum Aufstecken auf eine der Sammelschienen aufweisen; und einer Anschlußeinrichtung mit wenigstens vier Anschlüssen zum Anschließen elektrischer Leitungen; wobei der jeweilige Aufsteckabschnitt über eine Verbindungsleitung mit einem der wenigstens vier Anschlüsse elektrisch verbunden ist und zumindest ein Teil der Verbindungsleitungen jeweils ein elektrisches Sicherungsbauteil umfaßt.

## Beschreibung

Die Erfindung betrifft eine elektrische Koppelvorrichtung zum Aufstecken auf Sammelschienen eines Sammelschienensystems in einer elektrischen Energieversorgungseinheit.

Solche elektrischen Koppelvorrichtungen werden auch als Huckepackadapter bezeichnet und dienen der elektrischen Ankopplung an die Leitungen einer Energieversorgungseinheit. Das Aufstecken der Koppelvorrichtung hat hierbei den Vorteil einer einfachen und mit wenig Zeitaufwand ausbildbaren elektrischen Verbindung, die auch auf einfache Weise wieder gelöst werden kann. Die Koppelvorrichtung wird auf Sammelschienen des Sammelschienensystems aufgesteckt, wobei die Sammelschienen mit den Leitungen der Energieversorgung in Verbindung stehen.

Es sind Huckepackadapter in ein- und dreipoliger Ausführung zur Montage auf Sammelschienensystemen bekannt. Bei den bekannten Huckepackadaptern müssen separate Abgangsklemmen für den N-, den PE- bzw. den PEN-Leiter installiert werden. Die bekannten dreipoligen Huckepackadapter sind in ihrer Bauform so konzipiert, daß die vorgesehenen Sicherungselemente, welche in der Regel vom Typ NH 000 sind, nebeneinander angeordnet sind. Eine platzsparende Montage dieser Huckepackadapter ist nicht möglich.

Aufgabe der Erfindung ist es, eine elektrische Koppelvorrichtung zum Aufstecken auf Sammelschienen eines Sammelschienensystems in einer elektrischen Energieversorgungseinheit zu schaffen, welche einen flexiblen Einsatz der Koppelvorrichtung in Verbindung mit Anwendungen zum Ein-/Auskoppeln elektrischer Energie und/oder elektronischen Datensignalen ermöglicht und einen ausreichenden Sicherheitsstandard gewährleistet.

Diese Aufgabe wird erfindungsgemäß durch die elektrische Koppelvorrichtung gemäß dem Anspruch 1 gelöst.

Mit Hilfe der elektrischen Koppelvorrichtung ist eine einfache und mit wenig Zeitaufwand ausbildbare Möglichkeit zum Ankoppeln an eine elektrische Energieversorgungseinheit geschaffen. Die Koppelvorrichtung kann mit Hilfe der Steckkontakte auf die Sammelschienen aufgesteckt werden. Über die Anschlußeinrichtung, welche mit den Aufsteckabschnitten über Verbindungsleitungen in Verbindung steht, kann dann elektrische Energie abgegriffen oder eingespeist werden. Darüber hinaus ist es möglich, über die Anschlußeinrichtung elektrische Datensignale, beispielsweise PLC-Signale ("Power Line-Comunication" - PLC) ein- oder auszukoppeln. Mit Hilfe des Isoliergehäuses und den elektrischen Sicherungsbauteilen ist für das Bedienpersonal ein Schutz geschaffen.

Eine zweckmäßige Ausgestaltung der Erfindung sieht vor, daß der jeweilige Aufsteckabschnitt einen Klemmkontakt zum Aufstecken auf eine Breitseite der Sammelschiene aufweist, wodurch einerseits ein fester Sitz der Koppelvorrichtung auf den Sammelschienen und andererseits eine schnelle Lösbarkeit der Verbindung zwischen der Koppelvorrichtung und den Sammelschienen gewährleistet sind. Darüber hinaus ist es auf diese Weise ermöglicht, die Koppelvorrichtung von der Bedienseite des Sammelschienensystems zu montieren.

Eine vorteilhafte Weiterbildung der Erfindung kann vorsehen, daß die Steckkontakte mit einer in dem Isoliergehäuse montierten Leiterplatte elektrisch verbunden sind, so daß über die Leiterplatte eine Verbindung der Steckkontakte zu den Verbindungsleitungen ausgebildet ist. Hierdurch wird ein übersichtlicher Aufbau der Koppeleinrichtung unterstützt, was den Bedienkomfort erhöht.

Zweckmäßig kann bei einer Ausgestaltung der Erfindung das jeweilige Sicherungsbauteil auf der Leiterplatte angeordnet sein, so daß die Sicherungsbauteile auf einfache Weise in dem Isoliergehäuse fixiert sind.

Zur Unterstützung der kompakten Bauweise der Koppelvorrichtung kann bei einer vorteilhaften Ausführungsform der Erfindung vorgesehen sein, daß der Befestigungsabschnitt aus einem elektrisch leitenden Material ist und mit dem Aufsteckabschnitt elektrisch verbunden ist und daß an dem Befestigungsabschnitt eine Kontaktstelle zum elektrischen Ankoppeln der Verbindungsleitung ausgebildet ist. Darüber hinaus wird hierdurch ein geringer Übergangswiderstand gewährleistet.

Um ein unbeabsichtigtes Berühren der Kontaktstellen durch das Bedienpersonal zu verhindern, kann eine vorteilhafte Weiterbildung der Erfindung vorsehen, daß die Kontaktstelle im Innenraum des Isoliergehäuses angeordnet ist.

Ein hoher Isolationspegel zwischen einzelnen Phasen der Energieversorgungseinheit, an welche mittels der Koppelvorrichtung eine Ankopplung erfolgt, wird bei einer bevorzugten Ausgestaltung der Erfindung dadurch erreicht, daß der Innenraum mit Hilfe von Trennwänden in Kammern unterteilt ist, in denen jeweils ein innenliegender Abschnitt der Steckkontakte angeordnet ist. Aufgrund dieser Ausgestaltung ist die Koppelvorrichtung für den Vorzählereinsatz geeignet. Das Vorsehen der Trennwände unterstützt darüber hinaus einen kompakten Aufbau der Koppelvorrichtung.

Zum Verhindern von elektrischen Kontakten zwischen den Verbindungsleitung kann bei einer Fortbildung der Erfindung vorgesehen sein, daß der innenliegende Abschnitt den Befestigungsabschnitt umfaßt und die Kontaktstelle des Befestigungsabschnitts in einer der Kammern angeordnet ist.

Zweckmäßig ist in einem Teil der Kammern jeweils eines der Sicherungsbauteile angeordnet, wodurch die Sicherungsbauteile auf einfache Weise elektrisch voneinander isoliert sind.

Zum Vermeiden einer direkten Berührung der Verbindungsleitungen mit den Sicherungsbauteilen sieht eine vorteilhafte Weiterbildung der Erfindung vor, daß die Verbindungsleitung in dem Isoliergehäuse oberhalb der Trennwände geführt sind.

Die Eignung der Koppelvorrichtung für den Einsatz in Niederspannungs-Energieverteilungsnetzen vor dem Zähler wird bei einer bevorzugten Ausführungsform der Erfindung dadurch unterstützt, daß das Sicherungsbauteil eine strombegrenzende Hochleistungssicherung ist. Des weiteren ist auf dieses Weise eine Verwendung von einfach isolierten Leitungen für nachfolgende Geräteanschlüsse ermöglicht.

Eine Montage der Koppelvorrichtung unter Spannung ist bei einer zweckmäßigen Fortbildung der Erfindung dadurch ermöglicht, daß an dem Isoliergehäuse Grifflaschen für eine Betätigung mit einem Sicherungsaufsteckgriff vorgesehen sind. Hierdurch ist eine Betätigung mit vorhandenen Körperschutzmitteln und Werkzeugen ermöglicht. Darüber hinaus kann auf bekannte und eingeübte Betätigungs- bzw. Montagetechniken zurückgegriffen werden.

Bei einer bevorzugten Ausführungsform der Erfindung kann vorgesehen sein, daß das Isoliergehäuse ein Unterteil und einen Deckel zum Verschließen des Unterteils aufweist und daß die Grifflaschen an dem Unterteil angeordnet sind und durch Ausnehmungen in dem Deckel greifen, wodurch ein modular aufgebautes Gehäuse geschaffen ist, welches eine einfache Montage gewährleistet.

Bei einer bevorzugten Ausführungsform der Erfindung sind die Grifflaschen zweckmäßig an die Trennwände angeformt, wodurch ein verbesserter Intergrationsgrad erreicht ist und die mechanische Stabilität der Koppelvorrichtung unterstützt wird. Es findet so eine direkte Kraftübertragung zwischen den Trennwänden und dem Unterteil statt.

Eine zweckmäßige Ausgestaltung der Erfindung sieht vor, daß die Steckkontakte durch eine Seitenwand der Gehäusewand des Isoliergehäuses geführt sind, wobei die Seitenwand benachbart und abgewinkelt zu einer anderen Seitenwand der Gehäusewand des Isoliergehäuses ausgebildet ist, auf welche die Aufsteckabschnitte angeordnet sind. Hierdurch ist eine einfache Montage der Koppelvorrichtung gewährleistet. Es werden so Gehäuseöffnungen in Richtung der Sammelschienen vermieden. Des weiteren wird das Ausblasen von Lichtbogengasen im Fehlerfalle unterbunden.

Ein Schutz gegen das Kippen oder Verkannten auf den Sammelschienen ist bei einer bevorzugten Weiterbildung der Erfindung dadurch erreicht, daß die Aufsteckabschnitte außenbündig mit einer Außenfläche der anderen Seitenwand ausgebildet sind. Hierdurch ist die seitliche Stabilität verbessert, was insbesondere bei schmalbauenden Geräten von Bedeutung ist.

Die Stabilität der aufgesteckten Koppelvorrichtung an dem Sammelschienensystem wird bei einer vorteilhaften Ausgestaltung der Erfindung dadurch unterstützt, daß die Aufsteckabschnitte längs der anderen Seitenwand nebeneinander und seitlich versetzt zueinander angeordnet sind. Des weiteren wirkt diese Anordnung der Aufsteckabschnitte gegen ein Verkippen der Koppelvorrichtung.

Zweckmäßig kann bei einer Ausführungsform der Erfindung vorgesehen sein, daß an zumindest einem Teil der Aufsteckabschnitte jeweils ein Tiefenanschlag ausgebildet ist. Hierdurch ist ein definierter Sitz der Koppelvorrichtung auf den Sammelschienen gewährleistet. Eine vorteilhafte Weiterbildung der Erfindung kann vorsehen, daß auf der Außenfläche der anderen Seitenwand im Bereich zumindest eines Teils der Aufsteckabschnitte jeweils ein Nocken als ein anderer Tiefenanschlag ausgebildet ist. Hierdurch kann ausschließlich oder ergänzend ein Tiefenanschlag gebildet werden, der unabhängig von der Ausformung der Aufsteckkontakte ist.

Eine kompakte Bauweise der Koppelvorrichtung wird bei einer zweckmäßigen Fortbildung dadurch unterstützt, daß der Nocken eine Vertiefung zum Aufnehmen einer Befestigungsschraube zum Fixieren des Befestigungsabschnitts an dem Isoliergehäuse aufweist.

Die Nutzung vorgefertigter Leistungslängen für standardisierte Einbaugegebenheiten ist bei einer vorteilhaften Weiterbildung der Erfindung dadurch ermöglicht, daß die Verbindungsleitungen als flexible Leitungen ausgeführt sind und mit einer Buchse der Anschlußeinrichtung in Verbindung stehen, wobei die wenigstens vier Anschlüsse in die Buchse integriert sind. Hierdurch ist weiterhin ein Berührungsschutz geschaffen.

Eine gute Zugänglichkeit der Buchse beim Ankoppeln ist bei einer vorteilhaften Ausgestaltung der Erfindung dadurch erreicht, daß die Buchse an einer Stirnseite des Isoliergehäuses angeordnet ist.

Die Koppelvorrichtung in ihren verschiedenen Ausführungsformen entfaltet ihre Vorteile insbesondere bei einer Verwendung zum Einkoppeln und zum Auskoppeln von elektrischen Datensignalen im Rahmen einer Anwendung der PLC-Technik ("Power-Line-Communication" - PLC) oder zum Einspeisen/Abgreifen elektrischer Energie.

Die Erfindung wird im folgenden anhand von Ausführungsbeispielen unter Bezugnahme auf eine Zeichnung näher erläutert. Hierbei zeigen:
- Figur 1: eine elektrische Koppelvorrichtung von unten;
- Figur 2: eine Querschnittsdarstellung der elektrischen Koppelvorrichtung nach Figur 1;
- Figur 3: eine perspektivische Darstellung eines Gehäuses einer anderen elektrischen Koppelvorrichtung;
- Figur 4: eine schematische Darstellung des Gehäuses der anderen elektrischen Koppelvorrichtung nach Figur 3 von unten;
- Figur 5: einen Teilabschnitt der anderen elektrischen Koppelvorrichtung mit einem Steckkontakt von hinten;
- Figur 6: den Teilabschnitt der anderen elektrischen Koppelvorrichtung nach Figur 4 von vorn; und
- Figur 7: eine Querschnittsdarstellung der anderen elektrischen Koppelvorrichtung nach Figur 5 entlang einer Linie A-A'.

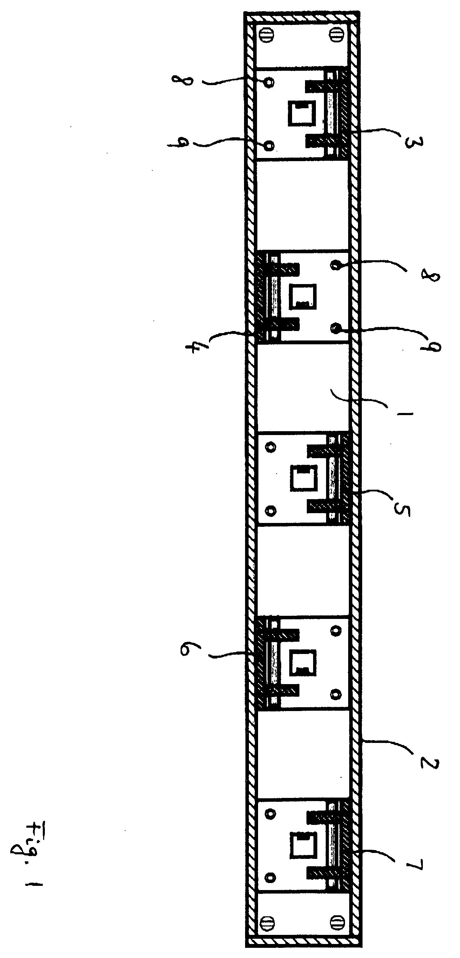

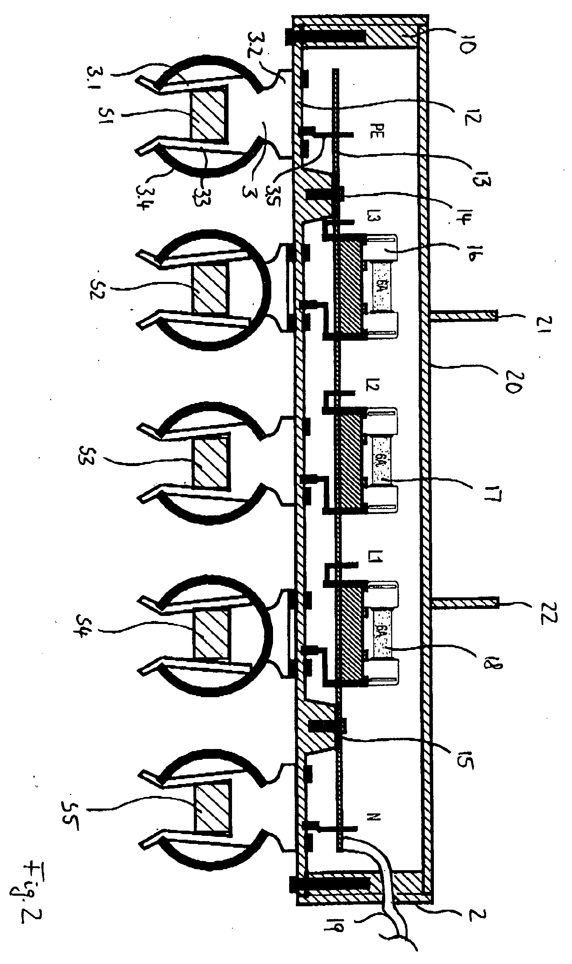

Unter Bezugnahme auf die Figuren 1 und 2 wird eine Ausführungsform einer elektrischen Koppelvorrichtung beschrieben. Figur 1 zeigt eine Unterseite 1 eines Gehäuses 2 der elektrischen Koppelvorrichtung. Auf der Unterseite 1 sind mehrere Steckkontakte 3, 4, 5, 6, 7 angeordnet. Die mehreren Steckkontakte 3-7 sind vorzugsweise mit Hilfe von jeweiligen Schrauben 8, 9 an dem Gehäuse 2 angeschraubt. Es kann jedoch auch vorgesehen sein, daß die mehreren Steckkontakte 3-7 auf der Unterseite 1 des Gehäuses 2 aufgeklebt, genietet oder mittels einer Einrastmontage befestigt sind.

Gemäß Figur 2 umfassen die mehreren Steckkontakte 3-7 jeweils einen Aufsteckabschnitt 3.1-7.1 und einem Befestigungsabschnitt 3.2-7.2. Im Bereich des Aufsteckabschnitts 3.1-7.1 ist ein Klemmkontakt 3.3-7.3 vorgesehen. Bei der Montage der Koppelvorrichtung auf Sammelschienen S1, S2, S3, S4, S5 eines Sammelschienensystems einer Energieversorgungseinheit werden die Klemmkontakte 3.3-7.3 auf die Sammelschienen S1-S5 gesteckt, vorzugsweise auf eine Breitseite der Sammelschienen S1-S5 (vgl. Figur 2). Der Klemmkontakt 3.3-7.3 wird mit Hilfe einer Feder 3.4-7.4 mechanisch vorgespannt, so daß beim Aufstecken auf die Sammelschiene S1-S5 mit Hilfe des Klemmkontakts 3.3-7.3 ein mechanischer Druck auf die Sammelschiene so ausgeübt wird, daß ein ausreichender elektrischer Kontakt zwischen der Sammelschiene und dem Klemmkontakt 3.3-7.3 gebildet wird.

Mit Hilfe der in den Figuren 1 und 2 dargestellten elektrischen Koppelvorrichtungen können drei Phasen L1, L2, L3 sowie die N-Leitung und die PE-Leitung des Sammelschienensystems kontaktiert werden. Hierbei kann die elektrische Koppelvorrichtung auch auf Sammelschienensysteme aufgesteckt werden, bei denen nur eine PEN-Sammelschiene vorhanden ist. In diesem Fall bleibt der Steckkontakt 3 frei.

Die Steckkontakte 3-7 sind im Bereich des Befestigungsabschnitts 3.2-7.2 an dem Gehäuse 2 angeschraubt. Das Gehäuse 2 wird gemäß Figur 2 von einem Unterteil 10 und einem Deckel 11 gebildet, welcher zum Verschließen des Unterteils 10 dient. Auf diese Weise wird ein Berührungsschutz gebildet, welcher der Schutzklasse IPX4 genügt. Auf einer Innenseite 12 des Deckels 11 ist eine Leiterplatte 13 mittels Schraubverbindungen 14, 15 befestigt. Alternativ kann auch eine Befestigung mittels Nieten, Einrastens oder Klebens vorgesehen sein. Auf der Leiterplatte 13 sind drei Sicherungen 16, 17, 18 montiert. Die Sicherungen 16, 17, 18 dienen zur elektrischen Absicherung der drei Phasen L1, L2, L3 und sind zweckmäßig als strombegrenzende Hochleistungssicherungen mit einem Schaltvermögen von mindestens 6 kA ausgeführt, so daß ein Einsatz der Koppelvorrichtung im Vorzählerbereich ermöglicht wird. Die Steckkontakte 3-7 sind über Verbindungsleitungen 3.5-7.5 mit der Leiterplatte 13 verbunden. Mit Hilfe der Verbindungsleitungen 3.5-7.5 erfolgt eine Durchkontaktierung durch den Dekkel 11, um zwischen den Steckkontakten 3.1-7.1 auf der Unterseite 1 des Gehäuses 2 und der Leiterplatte 13 im Inneren des Gehäuses 2 einen elektrischen Kontakt herzustellen.

Auf der Leiterplatte 13 sind Leiterbahnen (nicht dargestellt), um die Steckkontakte 3-7 mit einem Anschlußkabel 19 zu verbinden, was seitlich aus dem Gehäuse 2 geführt ist und über welches Geräte und/oder Bauelemente an die Steckkontakte 3-7 angekoppelt werden können. Um die Ankopplung der Geräte und/oder der Bauelemente zu erleichtern, kann zum elektrischen Abgreifen/Einkoppeln vorgesehen sein, ergänzend zu dem oder anstelle des Anschlußkabel(s) eine Anschlußbuchse (nicht dargestellt) an dem Gehäuse 2 auszubilden.

Auf einer Rückseite 20 des Gehäuses 2 sind Grifflaschen 21, 22 angeformt. Die Grifflaschen 21, 22 sind hierbei vorzugsweise als Grifflaschen für die Betätigung mit einem NH-Sicherungsaufsteckgriff, zweckmäßig nach VDE0636, Teil 201, ausgebildet. Mit Hilfe der Grifflaschen 21, 22 ist eine einfache, schnelle und sichere Installation der elektrischen Koppelvorrichtung gewährleistet, wobei auf das einem Monteur üblicherweise zur Verfügung stehende Werkzeug für die Montage von NH-Sicherungen zurückgegriffen werden kann.

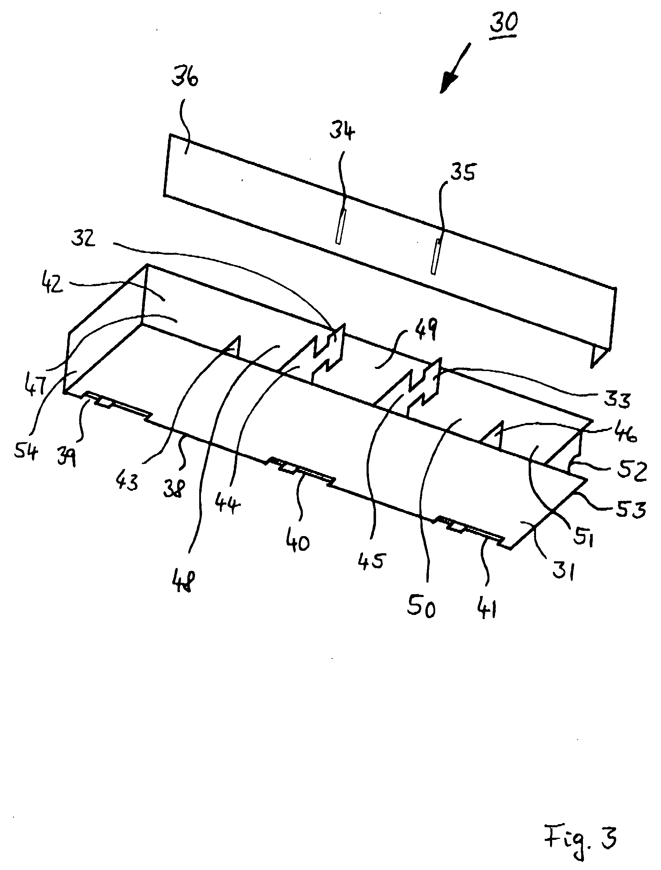

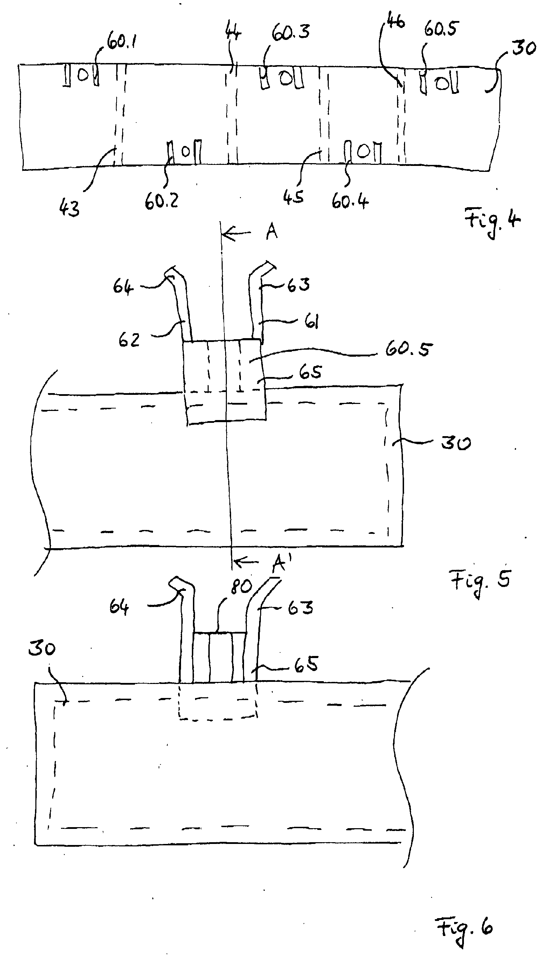

In den Figuren 3 bis 7 ist eine andere Ausführungsform einer elektrischen Koppelvorrichtung gezeigt, wobei in Figur 3 ausschließlich ein Gehäuse 30 der anderen Ausführungsform der elektrischen Koppelvorrichtung, ohne die übrigen Bauteile dargestellt ist. Das Gehäuse 30 ist aus einem isolierenden Material, vorzugsweise Kunststoff. Gemäß Figur 3 sind an einem Unterteil 31 Grifflaschen 32, 33 angeformt, die durch Öffnungen 34, 35 in einem Deckel 36 greifen, wenn der Deckel 36 an dem Unterteil 31 befestigt wird. Das Unterteil 31 weist auf einer Vorderseite 38 Öffnungen 39, 40, 41 auf, durch welche beim Zusammenbau der elektrischen Koppelvorrichtung Steckkontakte nach außen geführt werden (vgl. Figuren 4 bis 6).

In einem Innenraum 42 des Unterteils 31 sind Trennwände 43, 44, 45, 46 angeordnet, so daß Kammern 47, 48, 49, 50, 51 gebildet sind, in welchen die Steckkontakte (in Figur 3 nicht dargestellt) der elektrischen Koppelvorrichtung angeschlossen werden. Gemäß Figur 3 sind die Grifflaschen 32, 33 an die Trennwände 44, 45 angeformt. Durch eine Öffnung 52 auf einer Stirnseite 53 des Unterteils 31 ist beim Zusammenbau der Koppelvorrichtung ein Anschlußkabel (nicht dargestellt) geführt, um die Steckkontakte mit nachfolgenden Bauteile oder Geräten zu verbinden. Das Anschlußkabel ist vorzugsweise von flexiblen Leitungen gebildet. Es kann auch vorgesehen sein, daß auf der Stirnseite 53 oder auf einer entgegengesetzten Stirnseite 54 ein Anschlußstecker (nicht dargestellt) angebracht ist, um eine elektrische Ankopplung an die Steckkontakte zu ermöglichen.

In den Figuren 4 bis 7 ist die Anordnung der Steckkontakte bei Verwendung des in Figur 3 dargestellten Gehäuses 30 in Verbindung mit der anderen Ausführungsform der elektrischen Koppelvorrichtung im Detail gezeigt. Figur 4 zeigt das Gehäuse 30 mit Steckkontakten seitlich versetzten 60.1, 60.2, 60.3, 60.4, 60.5 nach Figur 3 von unten.

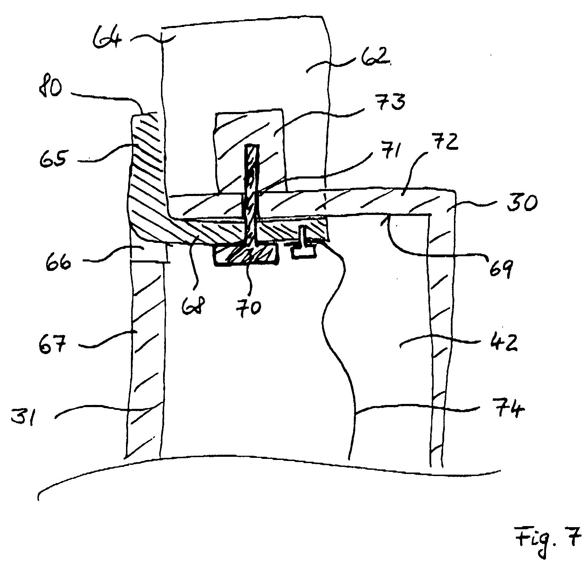

Die Figuren 5 und 6 zeigen im Detail einen der Steckkontakt 60.1-60.5 mit einem Aufsteckabschnitt 61, welcher einen Klemmkontakt 62 mit Armen 63 und 64 umfaßt. Der Aufsteckabschnitt 61 geht in einen Befestigungsabschnitt 65 über, wobei der Aufsteckabschnitt 61 und der Befestigungsabschnitt 65 aus einem elektrisch leitenden Material sind.

Gemäß Figur 7 ist der Befestigungsabschnitt 65 durch eine seitliche Öffnung 66 in einer Seitenwand 67 des Unterteils 31 des Gehäuses 30 in den Innenraum 42 geführt, wobei der Befestigungsabschnitt 65 außenbündig mit dem Unterteil 31, insbesondere der Seitenwand 67 ist. Ein abgewinkelter Abschnitt 68 des Befestigungsabschnitts 65 liegt flächig auf einer inneren Oberfläche 69 und ist mit Hilfe einer Schraube 70 an dem Gehäuse 30 befestigt. Die Schraube 70 greift durch eine Öffnung 71 in einem Wandabschnitt 72 des Gehäuses 30 und ist in einen auf dem Wandabschnitt 72 außen angeordneten Nocken 73 eingeschraubt. Der Nocken 73 dient gleichzeitig als Tiefenanschlag beim Aufstecken der anderen elektrischen Koppelvorrichtung auf die Sammelschienen und ist vorzugsweise einteilig mit dem aus einem isolierenden Material, beispielsweise Kunststoff, gebildeten Gehäuse 30, insbesondere mittels Spritzgießens. Ein alternativer oder ergänzender Tiefenanschlag ist durch eine obere Kante 80 des Befestigungsabschnitts 65 gebildet.

Eine Kontaktierung einer Verbindungsleitung 74 mit dem Steckkontakt 60.5 (vgl. Figur 7) erfolgt vorzugsweise direkt an dem abgewinkelten Abschnitt 68 des Befestigungsabschnitts 65. Hierdurch ist ein geringer Übergangswiderstand zwischen der Verbindungsleitung 74 und dem Steckkontakt 60.5 gewährleistet. Jeder der Steckkontakte 60.1-60.5 ist auf die in Figur 7 gezeigte Art und Weise mit einer zugehörigen Verbindungsleitung verbunden. Die zugehörigen Verbindungsleitungen sind in dem Gehäuse 30 dann oberhalb der Trennwände 43-46 geführt, so daß ein Kontakt einer Verbindungsleitung eines der Steckkontakte 60.1-60.5 mit einem anderen der Steckkontakte 60.1-60.5 vermieden wird.

Bei der in den Figuren 3 bis 7 gezeigten Ausführungsform sind für die Phasen L1, L2, L3 zugehörige Sicherung (nicht dargestellt) direkt an dem abgewinkelten Abschnitt 68 angebracht, wobei die zugehörigen Sicherungen den Sicherungen 16, 17, 18 (vgl. Figur 2) entsprechend ausgebildet sind.

Mit Hilfe der verschiedenen Ausführungsformen der Koppelvorrichtungen kann eine Ankopplung an Sammelschienen eines Sammleschienensystems einer Energieversorgungseinheit ausgeführt werden. Über die Steckkontakte 3-7 (vgl. Figur 2) bzw. 60.1-60.5 (vgl. Figur 4) können dann elektrische Spannungen und/oder elektronische Datensignale, beispielsweise in Verbindung mit der PLC-Technik, in die Sammelschienen eingekoppelt bzw. aus diesen ausgekoppelt werden. Die elektrischen Spannungen und/oder die elektronischen Datensignale werden hierbei von den Steckkontakten 3-7 bzw. 60.1-60.5 über Anschlußleitungen aus dem Gehäuse geführt, wobei an dem Gehäuse eine Anschlußbuchse zum Anschluß von Bauelemente oder Geräten vorgesehen sein kann, für welche die elektrischen Spannungen und/oder die elektronischen Datensignale ein-/ausgekoppelt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Elektrische Koppelvorrichtung zum Aufstecken auf Sammelschienen (S1-S5) eines Sammelschienensystems in einer elektrischen Energieversorgungseinheit mit:
- einem Isoliergehäuse (2 bzw. 30), in dem ein Innenraum ausgebildet ist;
- wenigstens vier voneinander elektrisch isolierten Steckkontakten (3-7 bzw. 60.1-60.5), die durch eine Gehäusewand des Isoliergehäuses (2 bzw. 30) durchkontaktiert sind und jeweils einen Befestigungsabschnitt (3.2-7.2 bzw. 65) zum Befestigen des Steckkontakts (3-7 bzw. 60.1-60.5) an dem Isoliergehäuse (2 bzw. 30) sowie einen aus einem elektrisch leitenden Material gebildeten und außerhalb des Isoliergehäuses (2 bzw. 30) angeordneten Aufsteckabschnitt (3.1-7.1 bzw. 61) zum Aufstecken auf eine der Sammelschienen (S1-S5) aufweisen; und
- einer Anschlußeinrichtung (19) mit wenigstens vier Anschlüssen zum Anschließen elektrischer Leitungen;
wobei der jeweilige Aufsteckabschnitt (3.1-7.1 bzw. 61) über eine Verbindungsleitung mit einem der wenigstens vier Anschlüsse elektrisch verbunden ist und zumindest ein Teil der Verbindungsleitungen jeweils ein elektrisches Sicherungsbauteil umfaßt.

2. Elektrische Koppelvorrichtung nach Anspruch 1, **dadurch gekennzeichnet, daß** der jeweilige Aufsteckabschnitt (3.1-7.1 bzw. 61) einen Klemmkontakt (3.3-3.7 bzw. 62) zum Aufstecken auf eine Breitseite der Sammelschiene (S1-S5) aufweist.

3. Elektrische Koppelvorrichtung nach Anspruch 1 oder 2, **dadurch gekennzeichnet, daß** die Steckkontakte (3-7) mit einer in dem Isoliergehäuse (2) montierten Leiterplatte (13) elektrisch verbunden sind, so daß über die Leiterplatte (13) eine Verbindung der Steckkontakte (3-7) zu den Verbindungsleitungen ausgebildet ist.

4. Elektrische Koppelvorrichtung nach Anspruch 3, **dadurch gekennzeichnet, daß** das jeweilige Sicherungsbauteil (16, 17, 18) auf der Leiterplatte (13) angeordnet ist.

5. Elektrische Koppelvorrichtung nach Anspruch 1 oder 2, **dadurch gekennzeichnet, daß** der Befestigungsabschnitt (65) aus einem elektrisch leitenden Material ist und mit dem Aufsteckabschnitt (61) elektrisch verbunden ist und daß an dem Befestigungsabschnitt (65) eine Kontaktstelle zum elektrischen Ankoppeln der Verbindungsleitung (74) ausgebildet ist.

6. Elektrische Koppelvorrichtung nach Anspruch 5, **dadurch gekennzeichnet, daß** die Kontaktstelle im Innenraum (42) des Isoliergehäuses (30) angeordnet ist.

7. Elektrische Koppelvorrichtung nach einem der vorangehenden Ansprüche, **dadurch gekennzeichnet, daß** der Innenraum (42) mit Hilfe von Trennwänden (43-46) in Kammern (47-51) unterteilt ist, in denen jeweils ein innenliegender Abschnitt der Steckkontakte (60.1-60.5) angeordnet ist.

8. Elektrische Koppelvorrichtung nach Anspruch 6 und 7, **dadurch gekennzeichnet, daß** der innenliegende Abschnitt den Befestigungsabschnitt (65) umfaßt und die Kontaktstelle des Befestigungsabschnitts (65) in einer der Kammern (47-51) angeordnet ist.

9. Elektrische Koppelvorrichtung nach Anspruch 7 oder 8, **dadurch gekennzeichnet, daß** in einem Teil der Kammern (47-51) jeweils eines der Sicherungsbauteile angeordnet ist.

10. Elektrische Koppelvorrichtung nach einem der Ansprüche 7 bis 9, **dadurch gekennzeichnet, daß** die Verbindungsleitungen (74) in dem Isoliergehäuse (30) oberhalb der Trennwände (43-46) geführt sind.

11. Elektrische Koppelvorrichtung nach einem der vorangehenden Ansprüche, **dadurch gekennzeichnet, daß** das Sicherungsbauteil eine strombegrenzende Hochleistungssicherung ist.

12. Elektrische Koppelvorrichtung nach einem der vorangehenden Ansprüche, **dadurch gekennzeichnet, daß** an dem Isoliergehäuse (2 bzw. 30) Grifflaschen (21, 22 bzw. 32, 33) für eine Betätigung mit einem Sicherungsaufsteckgriff vorgesehen sind.

13. Elektrische Koppelvorrichtung nach Anspruch 12, **dadurch gekennzeichnet, daß** das Isoliergehäuse (30) ein Unterteil (31) und einen Deckel (36) zum Verschließen des Unterteils (31) aufweist und daß die Grifflaschen (32, 33) an dem Unterteil (31) angeordnet sind und durch Ausnehmungen (34, 35) in dem Deckel (36) greifen.

14. Elektrische Koppelvorrichtung nach einem der Ansprüche 7 bis 12 und nach Anspruch 13, **dadurch gekennzeichnet, daß** die Grifflaschen (32, 33) an die Trennwände (43-46) angeformt sind.

15. Elektrische Koppelvorrichtung nach einem der vorangehenden Ansprüche, **dadurch gekennzeichnet, daß** die Steckkontakte (60.1-60.5) durch eine Seitenwand (67) der Gehäusewand des Isoliergehäuses (30) geführt sind, wobei die Seitenwand (67) benachbart und abgewinkelt zu einer anderen Seitenwand (72) der Gehäusewand des Isoliergehäuses (30) ausgebildet ist, auf welcher die Aufsteckabschnitte (61) angeordnet sind.

16. Elektrische Koppelvorrichtung nach Anspruch 15, **dadurch gekennzeichnet, daß** die Aufsteckabschnitte (61) außenbündig mit einer Außenfläche der anderen Seitenwand (72) ausgebildet sind.

17. Elektrische Koppelvorrichtung nach Anspruch 15 oder 16, **dadurch gekennzeichnet, daß** die Aufsteckabschnitte (61) längs der anderen Seitenwand (72) nebeneinander und seitlich versetzt zueinander angeordnet sind.

18. Elektrische Koppelvorrichtung nach einem der vorangehenden Ansprüche, **dadurch gekennzeichnet, daß** an zumindest einem Teil der Aufsteckabschnitte (61) jeweils ein Tiefenanschlag (80) ausgebildet ist.

19. Elektrische Koppelvorrichtung nach einem der vorangehenden Ansprüche, **dadurch gekennzeichnet, daß** auf der Außenfläche der anderen Seitenwand (72) im Bereich zumindest eines Teils der Aufsteckabschnitte (61) jeweils ein Nocken (73) als ein anderer Tiefenanschlag ausgebildet ist.

20. Elektrische Koppelvorrichtung nach Anspruch 19, **dadurch gekennzeichnet, daß** der Nocken (73) eine Vertiefung zum Aufnehmen einer Befestigungsschraube (70) zum Fixieren des Befestigungsabschnitts (61) an dem Isoliergehäuse (30) aufweist.

21. Elektrische Koppelvorrichtung nach einem der vorangehenden Ansprüche, **dadurch gekennzeichnet, daß** die Verbindungsleitungen (74) als flexible Leitungen ausgeführt sind und mit einer Buchse der Anschlußeinrichtung in Verbindung stehen, wobei die wenigstens vier Anschlüsse in die Buchse integriert sind.

22. Elektrische Koppelvorrichtung nach Anspruch 21, **dadurch gekennzeichnet, daß** die Buchse an einer Stirnseite des Isoliergehäuses (2 bzw. 30) angeordnet ist.

23. Verwendung einer elektrischen Koppelvorrichtung nach einem der Ansprüche 1 bis 22 zum Einkoppeln und zum Auskoppeln von elektronischen Datensignalen im Rahmen einer Anwendung der PLC-Technik ("Power-Line-Communication"- PLC).

24. Verwendung einer elektrischen Koppelvorrichtung nach einem der Ansprüche 1 bis 22 zum Einspeisen/Abgreifen elektrischer Energie.
